# EUROPEAN PATENT SPECIFICATION

(11) **EP 2 607 747 B1**
(45) Date of publication and mention of the grant of the patent: **05.07.2017**
(21) Application number: 12198419.9
(22) Date of filing: 20.12.2012
(51) Int. Cl.: F16G 11/10

(54) **Cord lock**
Kordelsperre
Verrouillage de corde

(30) Priority: 20.12.2011 TW 100147400
(43) Date of publication of application: 26.06.2013
(73) Proprietor: Nifco Taiwan Corporation, Taipei (TW)
(72) Inventor: Chang, Mark, Fitzroy VIC 3065 (AU); Stobitzer, Felix Robert, 91074 Herzogenaurach (DE); Hsiao, Hsiung-Ming, Sce.1, Tapei (TW)
(74) Representative: Wegner, Hans

(56) References cited:
- EP-A1- 0 620 381
- DE-U1- 8 708 661
- US-A- 4 878 269
- US-A- 5 471 713

## Description

### BACKGROUND OF THE INVENTION

### 1. Field of the Invention:

The present invention relates to cord locks and more particularly, to such a cord lock, which uses a slide member to carry a locking member in a base member between a locking position and an unlocking position, an elastic member to support the slide member in the locking position, and a cap for moving the slide member between the locking position and the unlocking position smoothly with less effort without causing friction and noise.

### 2. Description of the Related Art:

Many fasteners have been disclosed for use in shoes, bags, or clothes. A cord lock is a fastener for locking a cord member. When a cord lock is unlocked, it can be moved along the inserted cord member to adjust the opening of the shoe, bag, or clothe in which the cord member is installed.

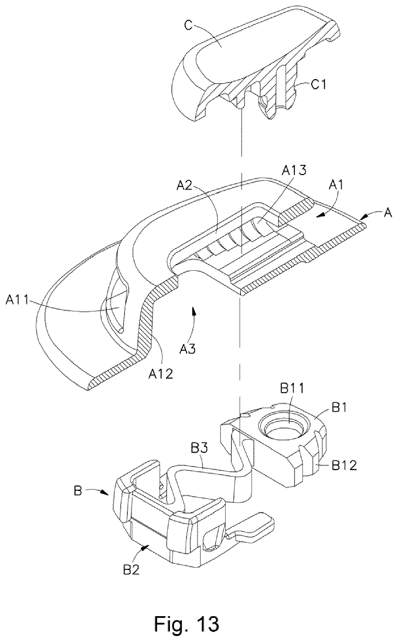

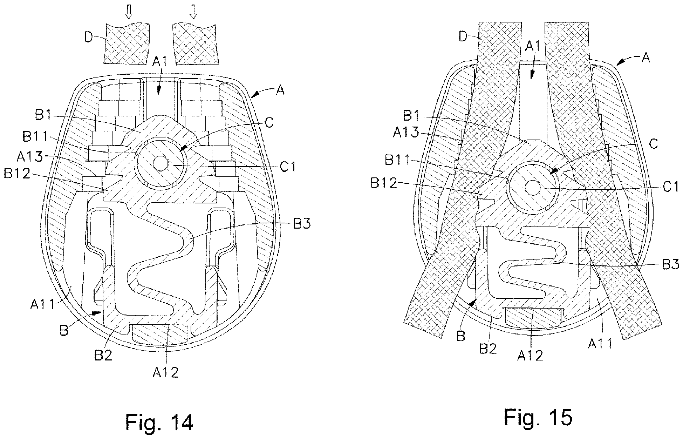

FIGS. 13 - 15 illustrates a cord lock according to the prior art. According to this design, the cord lock comprises a base member **A**, an elastic member **B** and a knob **C.** The base member **A** is a hollow member comprising a cord passageway **A1** for the passing of cord members **D,** two cord slots **A11** obliquely backwardly extended from the cord passageway **A1,** a stop wall **A12** located on the rear side thereof between the two cord slots **A11**, a top sliding hole **A2,** and an accommodation hole **A3** at the bottom side of the cord passageway **A1.** The elastic member **B** is inserted through the accommodation hole **A3** into the cord passageway **A1** of the base member **A,** comprising a sliding block **B1**, a locating block **B2** affixed to the base member **A,** and an elastically compressible portion **B3** connected between the sliding block **B1** and the locating block **B2,** The knob **C** has a bottom coupling shank **C1** inserted through the top sliding hole **A2** of the base member **A** and coupled to a coupling hole **B11** of the sliding block **B1.** Before insertion of cord members **D** into the cord passageway **A1** of the base member **A,** operate the knob **C** to move the sliding block **B1** in compressing the elastically compressible portion **B3** against the locating block **B2,** After insertion of cord members **D** into the cord passageway **A1** of the base member **A,** release the knob **C** from the hand, enabling the sliding block **B1** to be pushed back by the elastically compressible portion **B3** to force the side engagement portions **B12** thereof into engagement with the cord members **D** against respective toothed portions **A13** in the base member **A,** thereby locking the cord members **D** to the base member **A.**

By means of the coupling arrangement between the bottom coupling shank **C1** of the knob **C** and the coupling hole **B11** of the sliding block **B1** of the elastic member **B,** the sliding block **B1** can be moved by the knob **C** to lock/unlock the cord members **D.** However, the sliding block **B1** of the elastic member **B** tends to be biased during operation, causing unequal components of force to be applied to the cord members **D.** In this case, the cord members **D** may be jammed in the base member **1,** or the elastic member **B** may be damaged easily. Further, the user must employ much effort to operate the knob **C** in moving the sliding block **B1** of the elastic member **B.**

Document US 4,878,269 A discloses a fastener for releasably clamping cords which includes a housing having a cavity therein and a movable element disposed in said cavity defining one or two cord passages and further including a spring attached to the housing so that the passage is restricted by the movable element.

Document US 5,471,713 A discloses a cord retaining and fastening device having a housing with opposed passages through which two cord sections are disposed. A clamping element is removably secured in the housing between at least converging open sections of the passages and is biased towards converging open sections of the passages to clamp one or both of the cord sections when the cord sections are pulled in the biasing direction of the clamping element. When the cords are pulled from the passages, in an opposed direction to the biasing direction, they are free to move out of their respective passages.

Therefore, it is desirable to provide a cord lock that eliminates the drawbacks of the aforesaid prior art designs.

### SUMMARY OF THE INVENTION

The present invention has been accomplished under the circumstances in view. It is one object of the present invention to provide a cord lock, which can be stably and smoothly operated with less effort to accurately lock/unlock cord members without causing friction and noise, avoiding jamming of the cord members or component part damage during application.

To achieve this and other objects of the present invention, the cord lock comprises a base member, a slide member, an elastic member, a locking member and a cap. The base member comprises a horizontally extending passageway, two cord slots located on the rear side thereof and respectively extended from the rear end of the passageway, a front opening located on the front side thereof in communication with the front end of the passageway for allowing insertion of two cord members through the passageway and the cord slots, and a track located on a bottom side of the passageway and extending to the front opening. The slide member is accommodated in the passageway of the base member, comprising a base block, a sliding rail forwardly extended from the base block and slidably coupled to the track in the passageway of the base member, a stop block perpendicularly upwardly extended from the distal end of the sliding rail, and a recessed bearing portion located on the top side of the sliding rail between the base block and the stop block. The locking member is rotatably accommodated at the recessed bearing portion between the base block and the stop block, comprising a plurality of engagement protrusions spaced around the periphery thereof. The elastic member is set in the passageway inside the base member and stopped between the slide member and a part of the base member. The cap is supported on the top side of the base member and movable relative to the base member, comprising at least one bottom coupling rod downwardly extended from the bottom wall thereof and coupled to the slide member, for moving the slide member back and forth relative to the base member to carry the locking member between a locking position and an unlocking position.

Further, the slide member is made of a self-lubrication material so that the user can operate the cap to move the sliding rail back and forth smoothly and stably along the track of the base member with less effort and without causing friction and noise.

Further, the locking member is a flat circular block member rotatably positioned in the recessed bearing portion of the slide member and supported between the base block and stop block of the slide member. Thus, the cord members that are disposed at two opposite lateral sides relative to the locking member can receive a pressure evenly, avoiding a jam.

Further, the base member comprises two toothed portions respectively disposed in the passageway at two opposite lateral sides for engagement with the inserted cord members. Further, the locking member is a flat circular block member comprising a plurality of engagement protrusions spaced around the periphery thereof for stopping the inserted cord members against the toothed portions of the base member. By means of moving the slide member to carry the locking member relative to the base member, the gap between the engagement protrusions of the locking member and each of the toothed portions of the base member is relatively changed for locking the inserted cord members or releasing the cord members. Thus, the cord lock is practical for use in an object (shoe, clothing, bag, backpack, travel bag, etc.) to lock cord members that are used for fastening up the object or adjusting the tightness of the object.

Further, the cap comprises a push portion consisting of a plurality of non-slip cones and located on the top wall thereof for positive positioning of the user's thumb to move the cap relative to the base member smoothly and positively so that the slide member can be positively moved by the cap to carry the locking member along the track in the passageway of the base member between the locking position and the unlocking position.

### BRIEF DESCRIPTION OF THE DRAWINGS

FIG. 1 is an elevational view of a cord lock in accordance with a first embodiment of the present invention.
FIG. 2 is an exploded view of the cord lock in accordance with the first embodiment of the present invention.
FIG. 3 corresponds to FIG. 2 when viewed from another angle.
FIG. 4 is a sectional side view of the cord lock in accordance with the first embodiment of the present invention.
FIG. 5 is a schematic top view of the first embodiment of the present invention, illustrating a status of use of the cord lock before insertion of cord members into the base member.
FIG. 6 corresponds to FIG. 5, illustrating the cord members inserted through the base member and locked.
FIG. 7 is a schematic applied view of the first embodiment of the present invention, illustrating the cord lock installed in a shoe.
FIG. 8 is an exploded view of a cord lock in accordance with a second embodiment of the present invention.
FIG. 9 is an exploded view of a cord lock in accordance with a third embodiment of the present invention.
FIG. 10 corresponds to FIG. 9 when viewed from another angle.
FIG. 11 is a schematic sectional top view of the third embodiment of the present invention, illustrating a status of use of the cord lock.
FIG. 12 is an exploded view of a cord lock in accordance with a fourth embodiment of the present invention.
FIG. 13 is an exploded view, partially in sectional elevation, of a cord lock according to the prior art.
FIG. 14 is a schematic sectional top view illustrating a status of use of the cord lock according to the prior art (I).
FIG. 15 is a schematic sectional top view illustrating a status of use of the cord lock according to the prior art (II).

### DETAILED DESCRIPTION OF THE PREFERRED EMBODIMENT

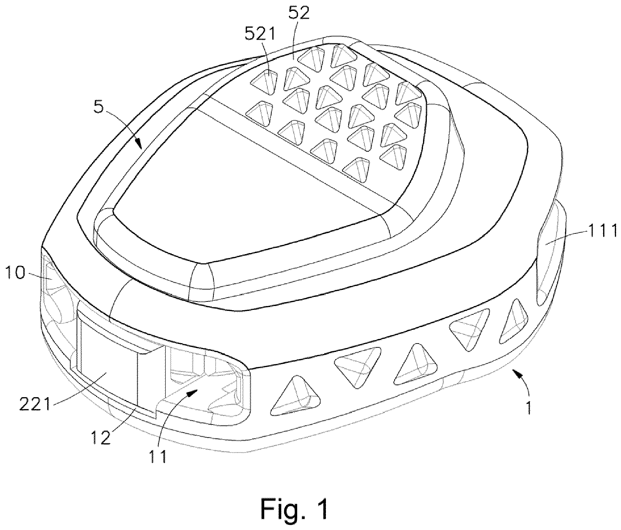

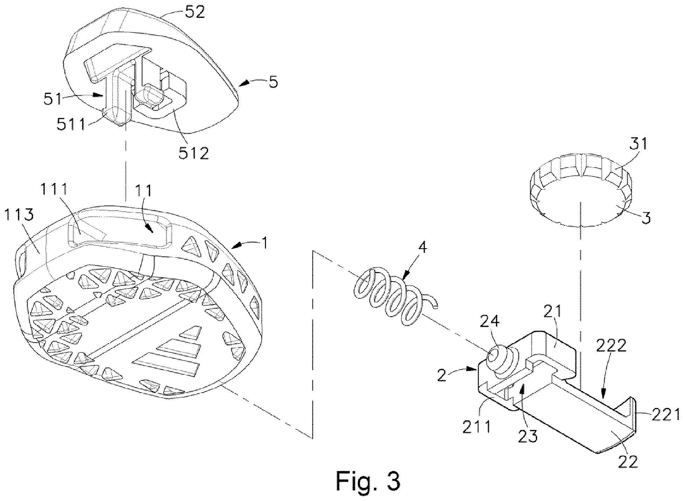

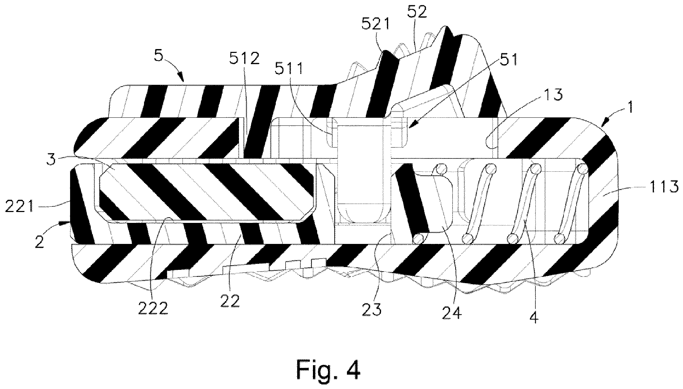

Referring to FIGS. 1 - 4, a cord lock in accordance with a first embodiment of the present invention is shown comprising a base member **1,** a slide member **2,** a locking member **3,** an elastic member **4** and a cap **5.**

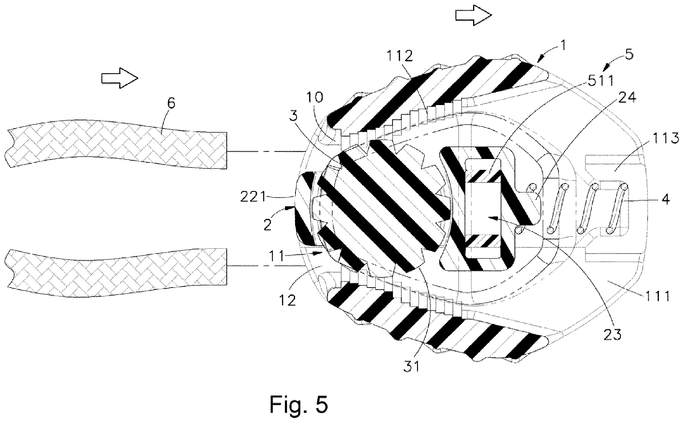

The base member **1** is a hollow container, defining therein a horizontally extending passageway **11,** two cord slots **111** located on the rear side thereof and respectively extended from the rear end of the passageway **11,** a front opening **10** located on the front side thereof in communication with the front end of the passageway **11** for allowing insertion of two cord members (or two ends of a cord member) **6** through the passageway **11** and the cord slots **111** (see also FIG. 5), two toothed portions **112** respectively disposed in the passageway **11** at two opposite lateral sides in such a manner that the width between the two toothed portions **112** increases gradually in direction from the front opening **10** toward the outer end of the cord slots **111,** and a stop wall **113** located on the rear side between the two cord slots **111.**

The base member **1** further defines therein a track **12** located on the bottom side of the passageway **11** and extending to the front opening **10,** and a top sliding slot **13** located on the top side thereof and vertically disposed in communication with the passageway **11** and two beveled guide edges **131** at two opposite lateral sides in the top sliding slot **13.**

The slide member **2** is accommodated in the passageway **11** of the base member **1,** comprising a base block **21,** a sliding rail **22** forwardly extended from the base block **21** and slidably coupled to the track **12** in the passageway **11,** a stop block **221** perpendicularly upwardly extended from the distal end of the sliding rail **22,** a recessed bearing portion **222** located on the top side of the sliding rail **22** between the base block **21** and the stop block **221,** and two stepped bearing edges **211** located on the bottom wall of the base block **21** at two opposite lateral sides relative to the sliding rail **22.**

The slide member **2** further defines therein a through hole **23** vertically cut through the top and bottom sides of the base block **21,** two retaining grooves **231** located on the inside wall of the base block **21** at two opposite lateral sides relative to the through hole **23,** and a locating rod **24** perpendicularly extended from the base block **21** at an opposite side relative to the sliding rail **22.**

The locking member **3** is a flat circular block member accommodated at the recessed bearing portion **222** between the base block **21** and the stop block **221,** having a plurality of engagement protrusions **31** spaced around the periphery and protruding over the two opposite lateral sides of the slide member **2** for stopping cord members **6** against the toothed portions **112** of the base member **1** to lock the cord members **6.**

The elastic member **4** according to this embodiment is a spring member, for example, compression spring, set in the passageway **11** inside the base member **1,** having its one end coupled to the locating rod **24** of the slide member **2** and its other end stopped against the stop wall **113** of the base member **1** to impart a forward pressure to the slide member **2** relative to the base member **1.**

The cap **5** is disposed at the top side of the base member **1** to shield the top sliding slot **13,** having at least one, for example, two bottom coupling rods **51,** which are inserted through the top sliding slot **13** of the base member **1** into the through hole **23** of the slide member **2** and hooked up with the retaining grooves **231** of the slide member **2** with respective hooked portions **511** thereof, and a bottom stop block **512** downwardly protruded from the bottom wall thereof and stoppable against one end edge of the top sliding slot **13** of the base member **1,** and a plurality of non-slip cones **521** on a push portion **52** at the top side thereof.

During installation, put the locking member **3** in the recessed bearing portion **222** of the slide member **2** and attach one end of the spring member **4** to the locating rod **24** of the slide member **2,** and then insert the slide member **2** with the spring member **4** and the locking member **3** through the front opening **10** into the passageway **11** of the base member **1** to couple the sliding rail **22** to the track **12** in the passageway **11** and to stop the other end of the spring member **4** against the stop wall **113** of the base member **1,** enabling the stepped bearing edges **211** of the base block **21** to be supported on the two opposite lateral sides of the sliding rail **22** so that the user can operate the cap **5** to move the slide member **2** back and forth smoothly and stably along the track **12** without causing friction and noise.

Thereafter, insert the bottom coupling rods **51** of the cap **5** through the top sliding slot **13** of the base member **1** into the through hole **23** of the slide member **2** to force the respective hooked portions **511** into engagement with the retaining grooves **231** of the slide member **2.** At this time, the spring member **4** imparts a pressure to the slide member **2** to force the bottom stop block **512** of the cap **5** into stoppage against one end edge of the opening **13** of the base member **1,** and the cap **5** keeps the top sliding slot **13** of the base member **1** from sight, maintaining the sense of beauty.

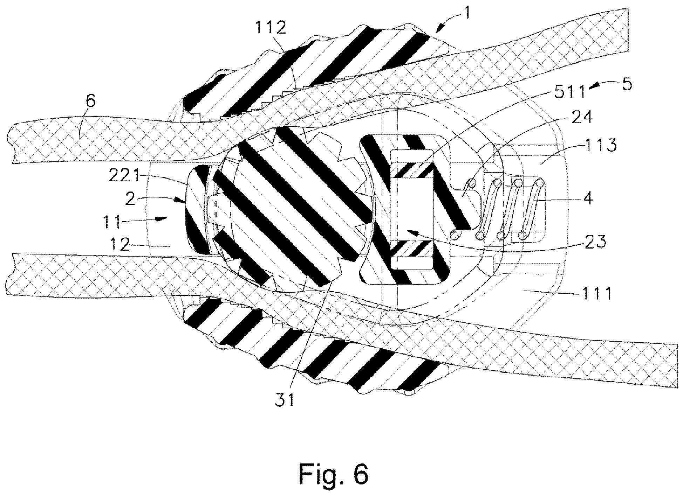

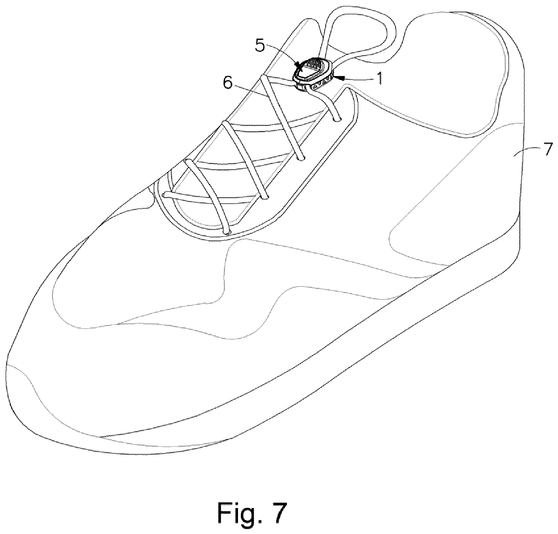

Referring to FIGS. 5 - 7, when using the cord lock, rest the thumb on the non-slip cones **521** of the push portion **52** and then apply a pressure to the push portion **52** to move the cap **5** relative to the base member **1** in one direction against the spring force of the spring member **4.** At this time, the slide member **2** is moved with the bottom coupling rods **51** of the cap **5** relative to the base member **1** to compress the spring member **4,** thereby increasing the gap between the engagement protrusions **31** of the locking member **3** and each of the toothed portions **112** of the base member **1.**

Thus, the user can insert two cord members (or two ends of the cord member) **6** of any of a variety of thicknesses through the front opening **10,** the passageway **11** and the cord slots **111.** After insertion of the two cord members (or two ends of a cord member) **6** through the base member **1,** release the hand from the push portion **52** of the cap **5,** enabling the spring member **4** to push the slide member **2** back to its former position. At this time, the locking member **3** is moved with the slide member **2** in direction toward the front opening **10** of the base member **1** to force the engagement protrusions **31** into engagement with the two cord members (or two ends of the cord member) **6** against the toothed portions **112** of the base member **1,** and therefore the cord members (or two ends of a cord member) **6** are locked to the base member **1.**

Further, the slide member **2** is preferably made of a self-lubrication material so that the sliding rail **22** can be moved back and forth smoothly and stably along the track **12** of the base member **1** with less effort and without causing friction and noise.

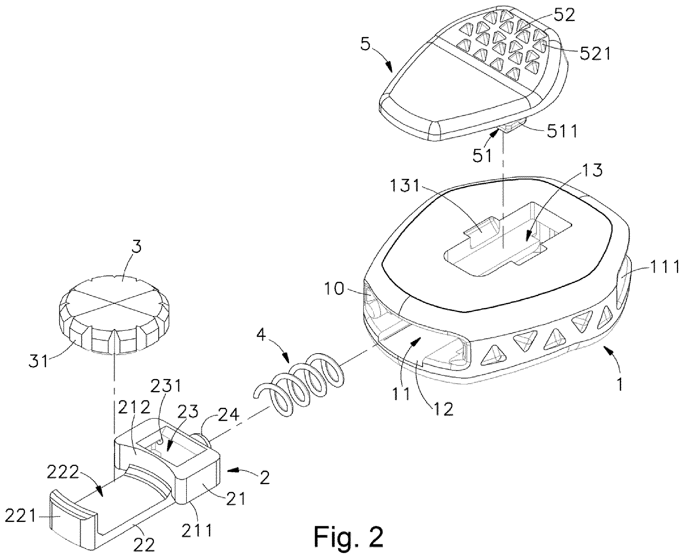

Further, the locking member **3** according to this embodiment is a flat circular block member accommodated at the recessed bearing portion **222** of the slide member **2** between the base block **21** and the stop block **221.** Further, the base block **21** has an inwardly curved and smoothly arched front wall **212** (see FIG. 2) kept in contact with the periphery of the locking member **3.** Further, the stop block **221** is transversely and smoothly arched to fit the circular configuration of the locking member **3.** Thus, the locking member **3** is prohibited from transverse displacement relative to the slide member **2** and can be rotated on the recessed bearing portion **222** of the slide member **2,** avoiding jamming of the cord members (or two ends of a cord member) **6** or component part damage during application.

When wishing to unlock the cord members (or two ends of the cord member) **6,** push the push portion **52** of the cap **5** to move the slide member **2** in carrying the locking member **3** away from the cord members (or two ends of the cord member) **6,** and then pull the cord members (or two ends of the cord member) **6** out of the base member **1.** The cord members (or two ends of the cord member) **6** can be used for fastening up an object **7** (shoe, clothing, bag, backpack, travel bag, etc.), or adjusting the tightness of the object **7.**

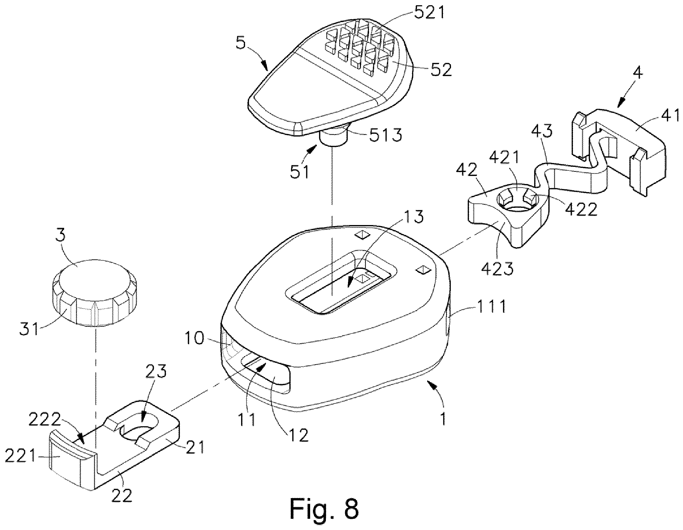

FIG. 8 illustrates a cord lock in accordance with a second embodiment of the present invention. According to this second embodiment, the elastic member **4** is an elastic plastic member having a base portion **41,** a connection portion **42** and a compressible portion **43** connected between the base portion **41** and the connection portion **42.** The connection portion **42** defines a constraint hole **421** corresponding to the top sliding slot **13** of the base member **1,** a plurality of retaining devices **422** spaced in the constraint hole **421** and a smoothly arched contact face **423** at the front side thereof. The locking member **3** is rotatably positioned in a recessed bearing portion **222** of the slide member **2** and supported between the stop block **221** of the slide member **2** and the smoothly arched contact face **423** of the connection portion **42** of the elastic member **4.** Further, the bottom coupling rod **51** of the cap **5** has an annular groove **513** extending around the periphery thereof and engaged with the retaining devices **422** in the constraint hole **421** of the connection portion **42** of the elastic member **4.**

When the user pushes the cap **5,** the bottom coupling rod **51** of the cap **5** is forced to carry the slide member **2** back and forth in the passageway **11** of the base member **1,** the elastic member **4** is compressed/released, and the locking member **3** is synchronously moved with the slide member **2** relative to the base member **1** between the locking position to lock the cord member(s) **6** to the base member **1** and the unlocking position to release the cord member(s) **6** from the base member **1.**

Referring to FIGS. 2 and 8 again, by means of the bottom coupling rod(s) **51,** the cap **5** is operable to move the slide member **2** back and forth in the passageway **11** of the base member **1,** thereby carrying the locking member **3** between the locking position to lock the cord member(s) **6** to the base member **1** and the unlocking position to release the cord member(s) **6** from the base member **1.** When the locking member **3** is disengaged from the cord member(s) **6,** the elastic member **4** automatically pushes the slide member **2** and the locking member **3** back to the unlocking position. Further, the elastic member **4** can be a metal coil spring or elastically compressible plastic member. Thus, the cord lock of the present invention is practical for use to lock the cord member(s) **6** of an object **7,** thereby fastening tight the object **7** or controlling the tightness of the object **7.**

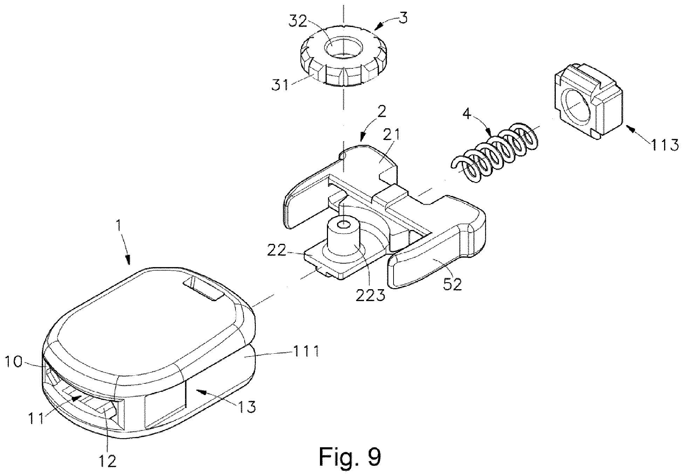

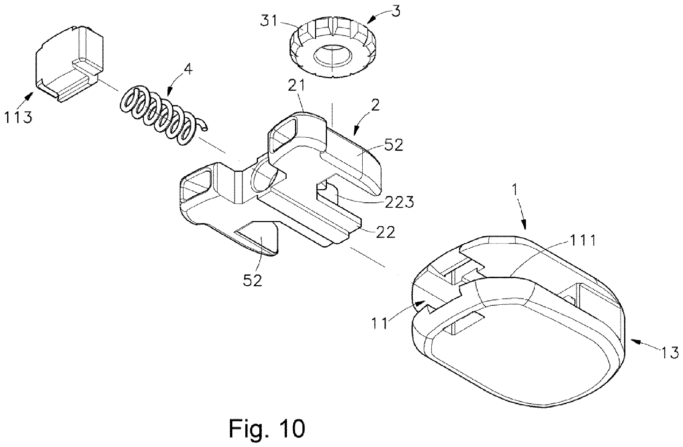

FIGS. 9 - 11 illustrate a cord lock in accordance with a third embodiment of the present invention. According to this third embodiment, the cord lock comprises a base member **1,** a slide member **2,** a locking member **3** and an elastic member **4.**

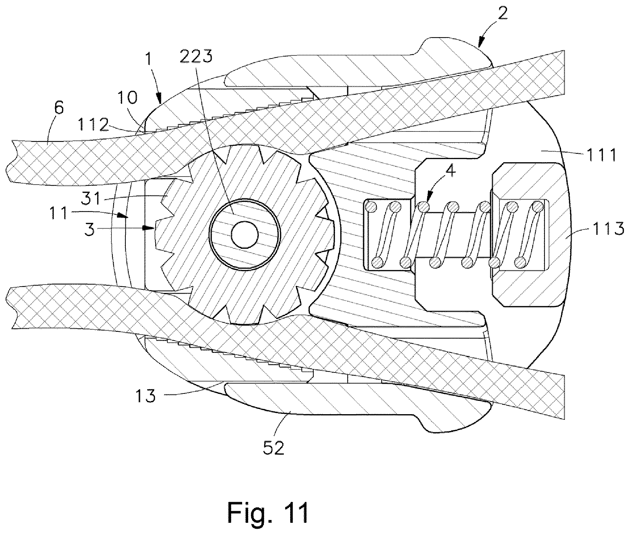

The base member **1** is a hollow container, defining therein a horizontally extending passageway **11,** two cord slots **111** located on the rear side thereof and respectively extended from the rear end of the passageway **11,** a front opening **10** located on the front side thereof in communication with the front end of the passageway **11** for allowing insertion of two cord members (or two ends of a cord member) **6** through the passageway **11** and the cord slots **111** (see also FIG. 11), two toothed portions **112** respectively disposed in the passageway **11** at two opposite lateral sides in such a manner that the width between the two toothed portions **112** increases gradually in direction from the front opening **10** toward the outer end of the cord slots **111,** a stop wall **113** located on the rear side between the two cord slots **111,** a track **12** located on the bottom side of the passageway **11** and extending to the front opening **10,** and two side holes **13** respectively disposed at two opposite lateral sides relative to the passageway **11.**

The slide member **2** is accommodated in the passageway **11** of the base member **1,** comprising a base block **21,** a sliding rail **22** forwardly extended from a middle part of one side of the base block **21,** an upright rod **223** vertically upwardly extended from the top side of the sliding rail **22** for inserting into a central through hole **32** of the locking member **3** and pivotally supporting the locking member **3,** and two side arms **52** forwardly extended from the base block **21** and disposed at two opposite lateral sides substantially in a parallel manner relative to the sliding rail **22.**

The locking member **3** has the same configuration as the aforesaid first and second embodiments.

The elastic member **4** is elastically compressibly set between the base member **1** and the slide member **2.**

The side arms **52** of the slide member **2** are respectively coupled to the side holes **13** of the base member **1** to guide reciprocating motion of the slide member **2** in the passageway **11** of the base member **1** in moving the locking member **3** synchronously so that the gap between the engagement protrusions **31** of the locking member **2** and the toothed portions **112** of the base member **1** can be conveniently adjusted to fit different sizes of cord members **6.**

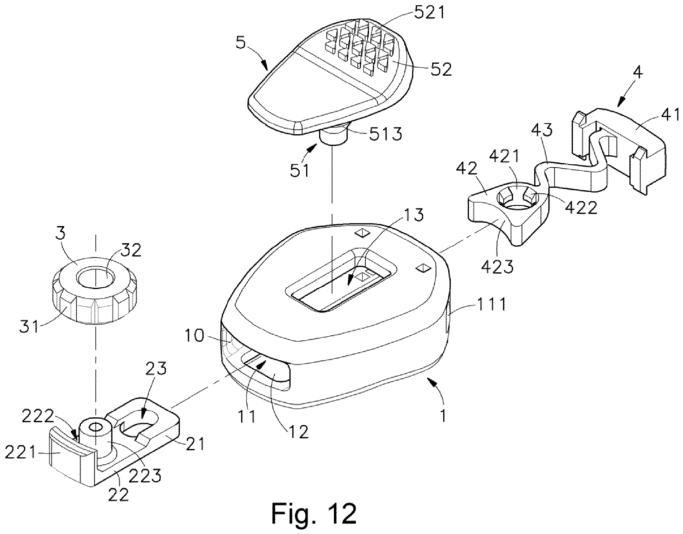

Please refer to **FIG.** 12 which illustrates a cord lock in accordance with a fourth embodiment of the present invention. This embodiment is substantially identical to the second embodiment shown in FIG. 8, except that an upright rod **223** is vertically upwardly extended from a top side of the sliding rail **22** for inserting into a central through hole **32** of the locking member **3** and pivotally supporting the locking member **3**

Although particular embodiments of the invention have been described in detail for purposes of illustration, various modifications and enhancements may be made without departing from the scope of the invention as defined by the appended claims. In the following, further examples are described to facilitate the understanding of the invention:
1. A cord lock comprising:
   a base member comprising a horizontally extending passageway, two cord slots located on a rear side thereof and respectively extended from a rear end of said passageway, a front opening located on a front side thereof in communication with a front end of said passageway for allowing insertion of two cord members through said passageway and said cord slots, and a track located on a bottom side of said passageway and extending to said front opening, said passageway having a width gradually increasing in direction from said front opening toward said cord slots;
   a slide member accommodated in said passageway of said base member, said slide member comprising a base block, a sliding rail forwardly extended from said base block and slidably coupled to said track in said passageway of said base member, a stop block perpendicularly upwardly extended from a distal end of said sliding rail, and a recessed bearing portion located on a top side of said sliding rail between said base block and said stop block;
   a locking member rotatably accommodated at said recessed bearing portion between said base block and said stop block, said locking member comprising a plurality of engagement protrusions spaced around the periphery thereof;
   an elastic member set in said passageway inside said base member and stopped between said slide member and a part of said base member; and
   a cap supported on a top side of said base member and movable relative to said base member, said cap comprising at least one bottom coupling rod downwardly extended from a bottom wall thereof and coupled to said slide member for enabling said slide member to be moved with said cap back and forth relative to said base member to carry said locking member between a locking position and an unlocking position.
2. The cord lock as claimed in example 1, wherein said base member comprises a stop wall located on the rear side thereof between said two cord slots and adapted for stopping one end of said elastic member against said slide member; said slide member comprises a locating rod extended from the base block thereof and coupled to an opposite end of said elastic member.
3. The cord lock as claimed in example 1, wherein said base member comprises two toothed portions respectively disposed in said passageway at two opposite lateral sides for engagement with the inserted cord members; said locking member is a flat circular block member comprising a plurality of engagement protrusions spaced around the periphery thereof for stopping the inserted cord members against said toothed portions of said base member.
4. The cord lock as claimed in example 1, wherein said base member comprises a top sliding slot vertically located on the top side thereof; said slide member comprises a through hole vertically cut through said base block; said at least one bottom coupling rod of said cap is inserted through said top sliding slot of said base member and coupled to the through hole on said base block of said slide member.
5. The cord lock as claimed in example 4, wherein said slide member comprises two retaining grooves located on an inside wall of said base block at two opposite lateral sides relative to the through hole of said base block; said at least one bottom coupling rod of said cap comprises two hooked portions respectively hooked up with said retaining grooves of said slide member.
6. The cord lock as claimed in example 4, wherein said slide member comprises a bottom stop block downwardly protruded from the bottom wall thereof and stoppable against one end edge of said top sliding slot.
7. The cord lock as claimed in example 4, wherein said elastic member comprises a base portion, a connection portion and a compressible portion connected between said base portion and said connection portion, said connection portion defining a constraint hole corresponding to said top sliding slot of said base member for the passing of said at least one bottom coupling rod of said cap.
8. The cord lock as claimed in example 7, wherein said elastic member further comprises a plurality of retaining devices spaced in said constraint hole; said at least one bottom coupling rod of said cap comprises an annular groove extending around the periphery thereof and engaged with the retaining devices of said elastic member.
9. The cord lock as claimed in example 7, wherein said connection portion of said elastic member has a smoothly arched contact face disposed at a front side thereof and kept in contact with the periphery of said locking member against said stop block of said slide member to prohibit displacement of said locking member relative to said slide member and allowing rotation of said locking member in said recessed bearing portion of said slide member.
10. The cord lock as claimed in example 1, wherein said base block of said slide member comprises an inwardly curved and smoothly arched front wall kept in contact with the periphery of said locking member, and two stepped bearing edges located on a bottom wall of said base block at two opposite lateral sides relative to said sliding rail and respectively supported on two opposite lateral sides of said sliding rail.
11. The cord lock as claimed in example 1, wherein said locking member is a flat circular block member rotatably positioned in said recessed bearing portion of said slide member; said stop block of said slide member is transversely and smoothly arched and kept in contact with the periphery of said locking member.
12. The cord lock as claimed in example 1, wherein said cap comprises a push portion consisting of a plurality of non-slip cones and located on a top wall thereof.
13. The cord lock as claimed in example 1, wherein the sliding rail comprises an upright rod extended from a top side of the sliding rail for inserting into a central through hole of the locking member and pivotally supporting the locking member.
14. A cord lock, comprising:
   a base member comprising a horizontally extending passageway, two cord slots located on a rear side thereof and respectively extended from a rear end of said passageway, a front opening located on a front side thereof in communication with the front end of said passageway for allowing insertion of two cord members through said passageway and said cord slots, a track located on a bottom side of said passageway and extending to said front opening, and two side holes respectively disposed at two opposite lateral sides relative to said passageway;
   a slide member accommodated in said passageway of said base member, said slide member comprising a base block, a sliding rail forwardly extended from a middle part of one side of said base block, an upright rod vertically upwardly extended from a top side of said sliding rail, and two side arms forwardly extended from said base block at two opposite lateral sides relative to said sliding rail and respectively coupled to said side holes of said base member for guiding forward and backward movement of said slide member relative to said base member;
   a locking member pivotally coupled to said upright rod of said slide member and movable with said slide member relative to said base member between a locking position for locking the inserted cord members to said base member and an unlocking position for releasing the inserted cord members from said base member, said locking member comprising a plurality of engagement protrusions spaced around the periphery thereof; and
   an elastic member elastically compressibly set between said base member and said slide member.
15. The cord lock as claimed in example 14, wherein said base member comprises two toothed portions respectively disposed in said passageway at two opposite lateral sides for engagement with the inserted cord members; said locking member is pivotally mounted on said upright rod of said slide member and movable by said slide member to stop the inserted cord members against said toothed portions of said base member.
16. The cord lock as claimed in example 14, wherein said base member comprises a stop wall located on the rear side thereof between said two cord slots for stopping said elastic member against said slide member.
17. The cord lock as claimed in example 14, wherein said locking member is a flat circular block member comprising a plurality of engagement protrusions spaced around the periphery thereof.

## Claims

1. A cord lock, comprising:
a) a base member (1), comprising:
a horizontally extending passageway (11),
two cord slots (111) located on a rear side thereof and respectively extended from a rear end of said passageway,
a front opening (10) located on a front side thereof in communication with a front end of said passageway, and
a track (12) located on a bottom side of said passageway and extending to said front opening;
b) a slide member (2) accommodated in said passageway of said base member, comprising:
a sliding rail (22), slidably coupled to said track in said passageway of said base member;
c) a locking member (3), rotatably accommodated at said slide member;
d) an elastic member (4), set in said passageway inside said base member and stopped between said slide member and a part of said base member.

2. The cord lock of claim 1,
wherein said locking member is a flat circular block member.

3. The cord lock of claims 1 or 2,
wherein the front opening (10) allows insertion of two cord members (6) through said passageway and said cord slots, and
said passageway having a width gradually increasing in direction from said front opening towards said cord slots.

4. The cord lock of one of claims 1-3,
wherein said slide member further comprises a base block (21) with said sliding rail forwardly extended from said base block, a stop block (221) perpendicularly upwardly extended from a distal end of said sliding rail, and a recessed bearing portion (222) located on a top side of said sliding rail between said base block and said stop block;
wherein said locking member is rotatably accommodated at said recessed bearing portion between said base block and said stop block, said locking member comprising a plurality of engagement protrusions (31) spaced around the periphery thereof; and
further comprising a cap (5) supported on a top side of said base member and movable relative to said base member, said cap comprising at least one bottom coupling rod (51) downwardly extended from a bottom wall thereof and coupled to said slide member for enabling said slide member to be moved with said cap back and forth relative to said base member to carry said locking member between a locking position and an unlocking position.

5. The cord lock of claim 4,
wherein said base member comprises a stop wall (113) located on the rear side thereof between said two cord slots and adapted for stopping one end of said elastic member against said slide member; and
wherein said slide member comprises a locating rod (24) extended from the base block thereof and coupled to an opposite side of said elastic member.

6. The cord lock of one of claims 3 - 5,
wherein said base member comprises two toothed portions (112) respectively disposed in said passageway at two oppoiste lateral sides for engagement with the inserted cord members; and
wherein said locking member comprises a plurality of engagement protrusions (31) spaced around the periphery thereof for stopping the inserted cord members against said toothed portions of said base member.

7. The cord lock of one of claims 4 - 6,
wherein said base member comprises a top sliding slot (13) vertically located on the top side thereof;
wherein said slide member comprises a through hole (23) vertically cut through said base block; and
wherein said at least one bottom coupling rod of said cap is inserted through said top sliding slot of said base member and coupled to the through hole on said base block of said slide member.

8. The cord lock of claim 7,
wherein said slide member comprises two retaining grooves (231) located on an inside wall of said base block at two opposite lateral sides relative to the through hole of said base block; and
wherein said at least one bottom coupling rod of said cap comprises two hooked portions (511) respectively hooked up with said retaining grooves of said slide member.

9. The cord lock of claims 7 or 8,
wherein said elastic member comprises a base portion (41), a connection portion (42) and a compressible portion (43) connected between said base portion and said connection portion;
said connection portion defining a constraint hole (421) corresponding to said top sliding slot of said base member for the passing of said at least one bottom coupling rod of said cap.

10. The cord lock of one of claim 9,
wherein said elastic member further comprises a plurality of retaining devices spaces in said constraint hole; and
wherein said at least one bottom coupling rod of said cap comprises an annular groove extending around the periphery thereof and engaged with the retaining devices of said elastic member.

11. The cord lock of one of claims 9 or 10,
wherein said connection portion of said elastic member has a smoothly arched contact face disposed at a front side thereof and kept in contact with the periphery of said locking member against said stop block of said slide member to prohibit displacement of said locking member relative to said slide member and allowing rotation of said locking member in said recessed bearing portion of said slide member.

12. The cord lock of one of claims 4 - 11,
wherein said stop block of said slide member is transversely and smoothly arched and kept in contact with the periphery of said locking member.

13. The cord lock of one of the claims 1 - 12,
wherein said locking member further comprises a central through hole (32); and
wherein said sliding rail comprises an upright rod (223) extended from a top side of the sliding rail for inserting into said central through hole of said locking member and pivotally supporting the locking member.

14. The cord lock of one of claims 4 - 13,
wherein said cap comprises a push portion consisting of a plurality of non-slip cones (521) located on a top wall of said cap.

15. The cord lock of claim 13,
wherein said base member further comprises two side holes (13) respectively disposed at two opposite lateral sides relative to said passageway, and wherein said base member allows the insertion of two cord members through said passageway and said cord slots ;
wherein said slide member further comprises a base block, with said sliding rail forwardly extended from the middle part of one side of said base block, and wherein said slide member further comprises two side arms (52) forwardly extended from said base block at two opposite lateral sides relative to said sliding rail and respectively coupled to said side holes of said base member for guiding forward and backward movement of said slide member relative to said base member; and
wherein said locking member is movable with said slide member relative to said base member between a locking position for locking the inserted cord members to said base member and an unlocking position for releasing the inserted cord members from said base member, said locking member further comprising a plurality of engagement protrusions spaced around the periphery thereof.

## Patentansprüche

1. Schnurschloss, aufweisend:
a) ein Basiselement (1), aufweisend:
einen sich horizontal erstreckenden Durchgang (11),
zwei Schnurschlitze (111), welche sich an einer Rückseite von diesem befinden und sich jeweils von einem hinteren Ende besagten Durchgangs weg erstrecken,
eine vordere Öffnung (10), welche sich an einer Vorderseite von diesem befindet und in Verbindung steht mit einem vorderen Ende besagten Durchgangs, und
eine Spur (12), welche sich auf einer Unterseite besagten Durchgangs befindet und sich zu besagter vorderer Öffnung hin erstreckt;
b) ein Gleitelement (2), welches in besagtem Durchgang von besagtem Basiselement untergebracht ist, aufweisend:
eine Gleitschiene (22), welche gleitend mit besagter Spur in besagtem Durchgang des besagten Basiselements gekoppelt ist;
c) ein Verschlusselement (3), welches drehbar an besagtem Gleitelement untergebracht ist;
d) ein elastisches Element (4), welches in besagtem Durchgang innerhalb des besagten Basiselements eingesetzt ist und zwischen besagtem Gleitelement und einem Teil des besagten Basiselements arretiert ist.

2. Schnurschloss gemäß Anspruch 1,
wobei besagtes Verschlusselement ein flaches, rundes Blockelement ist.

3. Schnurschloss gemäß Anspruch 1 oder 2,
wobei die vordere Öffnung (10) ein Einführen von zwei Schnurelementen (6) durch besagten Durchgang und die besagten Schurschlitze erlaubt, und
besagter Durchgang eine Breite hat, welche in Richtung von besagter vorderer Öffnung zu den besagten Schnurschlitzen hin graduell zunimmt.

4. Schnurschloss gemäß einem der Ansprüche 1 - 3,
wobei besagtes Gleitelement weiter einen Basisblock (21) aufweist, wobei besagte Gleitschiene sich nach vorne von besagtem Basisblock weg erstreckt, einen Stoppblock (221), der sich von einem distalen Ende besagter Gleitschiene senkrecht nach oben weg erstreckt, und einen eingelassenen Aufnahmeabschnitt (222), welcher sich auf einer Oberseite der besagten Gleitschiene zwischen besagtem Basisblock und besagtem Stoppblock befindet;
wobei besagtes Verschlusselement drehbar an dem besagten eingelassenen Aufnahmeabschnitt zwischen besagtem Basisblock und besagtem Stoppblock untergebracht ist, wobei besagtes Verschlusselement eine Mehrzahl von Einrastvorsprüngen (31) aufweist, die um die Peripherie desselben herum verteilt sind; und
weiter aufweisend eine Kappe (5), welche auf einer Oberseite des besagten Basiselements aufliegt und relativ zu besagtem Basiselement bewegbar ist, wobei besagte Kappe zumindest einen unteren Kopplungsstab (51) aufweist, welcher sich von einer unteren Wand derselben nach unten weg erstreckt und mit besagtem Gleitelement koppelt, um es besagtem Gleitelement zu ermöglichen, zusammen mit der Kappe relative zu besagtem Basiselement nach hinten und vorne bewegt zu werden, um besagtes Verschlusselement zwischen einer geschlossenen Position und einer nichtgeschlossenen Position zu führen.

5. Schnurschloss gemäß Anspruch 4,
wobei besagtes Basiselement eine Stoppwand (113) aufweist, welche sich auf dessen Rückseite zwischen den besagten Schnurschlitzen befindet und ausgestaltet ist, ein Ende des besagten elastischen Elements gegen besagtes Gleitelement zu arretieren; und
wobei besagtes Gleitelement einen Lokalisierungsstab (24) aufweist, der sich von dem Basisblock desselben weg erstreckt und an eine gegenüberliegende Seite des besagten elastischen Elements koppelt.

6. Schnurschloss gemäß einem der Ansprüche 3 - 5,
wobei besagtes Basiselement zwei gezahnte Abschnitte (112) aufweist, welche in besagtem Durchgang auf zwei gegenüberliegenden lateralen Seiten angeordnet sind, um in die eingeführten Schnurelemente einzurasten; und
wobei besagtes Verschlusselement eine Mehrzahl von Einrastvorsprüngen (31) aufweist, die um die Peripherie desselben herum verteilt sind, um die eingeführten Schnurelemente gegen die besagten gezahnten Abschnitte des besagten Basiselements zu arretieren.

7. Schnurschloss gemäß einem der Ansprüche 4 - 6,
wobei besagtes Basiselement einen oberen Gleitschlitz (13) aufweist, welcher sich vertikal auf der Oberseite desselben befindet;
wobei besagtes Gleitelement ein Durchgangsloch (23) aufweist, welches vertikal durch besagten Basisblock geschnitten ist; und
wobei besagter zumindest einer unterer Kopplungsstab der besagten Kappe durch den besagten oberen Gleitschlitz des besagten Basiselements gesteckt ist und an das Durchgangsloch auf besagtem Basisblock des besagten Gleitelements koppelt.

8. Schnurschloss gemäß Anspruch 7,
wobei besagtes Gleitelement zwei Haltenuten (231) aufweist, welche sich auf einer Innenwand des besagen Basisblocks auf zwei gegenüberliegenden lateralen Seiten relative zu dem Durchgangsloch des besagten Basisblocks befinden; und
wobei besagter zumindest einer unterer Kopplungsstab der besagten Kappe zwei Hakenabschnitte (511) aufweist, welche mit besagten Haltenuten des besagten Gleitelements verhakt sind.

9. Schnurschloss gemäß Anspruch 7 oder 8,
wobei besagtes elastisches Element einen Basisabschnitt (41) aufweist, einen Verbindungsabschnitt (42) und einen kompressiblen Abschnitt (43), welcher besagten Basisabschnitt mit besagtem Verbindungsabschnitt verbindet;
wobei besagter Verbindungsabschnitt ein Beschränkungsloch (421) definiert, welches mit besagtem oberen Gleitschlitz des besagten Basiselements korrespondiert, für das Hindurchlaufen des besagten zumindest einen unteren Kopplungsstabs der besagten Kappe.

10. Schnurschloss gemäß einem aus Anspruch 9,
wobei besagtes elastisches Element weiter eine Mehrzahl von Haltevorrichtungen aufweist, welche in besagtem Beschränkungsloch verteilt sind; und
wobei besagter zumindest einer unterer Kopplungsstab der besagten Kappe eine ringförmige Nut aufweist, welche sich um die Peripherie desselben herum erstreckt und an die Haltevorrichtungen des besagten elastischen Elements gekuppelt ist.

11. Schnurschloss gemäß einem der Ansprüche 9 oder 10,
wobei besagter Verbindungsabschnitt des besagten elastischen Elements eine glatt gekrümmte Kontaktoberfläche hat, die an einer Vorderseite desselben angebracht ist und in Kontakt mit der Peripherie des besagten Verschlusselement gehalten wird, die gegen den besagten Stoppblock des besagten Gleitelements liegt, um ein Verrutschen des besagten Verschlusselements relativ zu besagtem Gleitelement zu verhindern und eine Drehung des besagten Verschlusselements in besagtem eingelassenen Aufnahmeabschnitt des besagten Gleitelements zu erlauben.

12. Schnurschloss gemäß einem der Ansprüche 4 - 11,
wobei besagter Stoppblock des besagten Gleitelements in Querrichtung und glatt gekrümmt ist und in Kontakt mit der Peripherie des besagten Verschlusselements gehalten wird.

13. Schnurschloss gemäß einem der Ansprüche 1 - 12,
wobei besagtes Verschlusselement weiter ein zentrales Durchgangsloch (32) aufweist; und
wobei besagte Gleitschiene einen aufrechten Stab (223) aufweist, der sich von einer Oberseite der Gleitschiene weg erstreckt, um in besagtes zentrales Durchgangsloch des besagten Verschlusselements eingeführt zu werden und das Verschlusselement drehbar zu tragen.

14. Schnurschloss nach einem der Ansprüche 4 - 13,
wobei besagte Kappe einen Drückabschnitt aufweist, welcher aus einer Mehrzahl von anti-rutsch Kegeln (521) besteht, welche sich auf einer oberen Wand besagter Kappe befinden.

15. Schnurschloss gemäß Anspruch 13,
wobei besagtes Basiselement weiter zwei Seitenlöcher (13) aufweist, welche auf zwei gegenüberliegenden lateralen Seiten relativ zu besagtem Durchgang angebracht sind, und wobei besagtes Basiselement das Einführen von zwei Schnurelementen durch besagten Durchgang und die besagten Schnurschlitze erlaubt;
wobei besagtes Gleitelement weiter einen Basisblock aufweist, wobei besagte Gleitschiene sich von dem Mittelteil von einer Seite des besagten Basisblocks nach vorne weg erstreckt und wobei besagtes Gleitelement weiter zwei Seitenarme (52) aufweist, die sich von besagtem Basisblock auf zwei gegenüberliegenden Seiten relativ zu besagter Gleitschiene nach vorne weg erstrecken und mit besagten Seitenlöchern des besagten Basiselements gekoppelt sind, um Vorwärts- und Rückwärtsbewegungen des besagten Gleitelements relativ zu besagtem Basiselement zu führen; und
wobei besagtes Verschlusselement zusammen mit besagtem Gleitelement relativ zu besagtem Basiselement zwischen einer geschlossenen Position, um die eingeführten Schnurelemente an das genannte Basiselement zu fixieren, und einer nichtgeschlossenen Position, um die eingeführten Schnurelemente von besagtem Basiselement freizugeben, bewegbar ist, wobei besagtes Verschlusselement weiter eine Mehrzahl von Einrastvorsprüngen aufweist, die um die Peripherie desselben herum verteilt sind.

## Revendications

1. Un bloqueur de cordons, comprenant :
a) un organe de base (1), comprenant :
un passage (11) s'étendant horizontalement,
deux fentes de cordon (111) situées d'un côté arrière de celui-ci et s'étendant respectivement à partir d'une extrémité arrière dudit passage,
une ouverture avant (10) située d'un côté avant de celui-ci en communication avec une extrémité avant dudit passage, et
un guide (12) situé d'un côté de dessous dudit passage et s'étendant vers ladite ouverture avant ;
b) un organe coulissant (2) logé dans ledit passage dudit organe de base, comprenant :
un rail coulissant (22), couplé à coulissement audit guide dans ledit passage dudit organe de base ;
c) un organe de blocage (3), logé à rotation au niveau dudit organe coulissant ;
d) un organe élastique (4), disposé dans ledit passage à l'intérieur dudit organe de base et bloqué entre ledit organe coulissant et une partie dudit organe de base.

2. Le bloqueur de cordons de la revendication 1,
dans lequel ledit organe de blocage est un organe de blocage circulaire aplati.

3. Le bloqueur de cordons des revendications 1 ou 2,
dans lequel l'ouverture avant (10) permet l'insertion de deux organes de cordon (6) au travers dudit passage et desdites fentes de cordon, et
ledit passage présente une largeur qui augmente graduellement dans un sens allant de ladite ouverture avant vers lesdites fentes de cordon.

4. Le bloqueur de cordons de l'une des revendications 1 à 3,
dans lequel ledit organe coulissant comprend en outre un bloc de base (21) avec ledit rail coulissant s'étendant vers l'avant à partir dudit bloc de base, un bloc de butée (221) s'étendant perpendiculairement vers le haut à partir d'une extrémité distale dudit rail coulissant, et une partie de palier en évidement (222) situé sur un côté supérieur dudit rail coulissant entre ledit bloc de base et ledit bloc de butée ;
dans lequel ledit organe de blocage est logé à rotation au niveau de ladite partie de palier en évidement entre ledit bloc de base et ledit bloc de butée, ledit organe de blocage comprenant une pluralité de saillies de venue en prise (31) espacées autour de la périphérie de celui-ci ; et
comprenant en outre un capot (5) supporté d'un côté de dessus dudit organe de base et mobile par rapport audit organe de base, ledit capot comprenant au moins une tige de couplage de dessous (51) s'étendant vers le bas à partir d'une paroi de dessous de celui-ci et couplé audit organe coulissant pour permettre audit organe coulissant d'être déplacé avec ledit capot dans un sens et dans l'autre par rapport audit organe de base pour porter ledit organe de blocage entre une position de verrouillage et une position de déverrouillage.

5. Le bloqueur de cordons de la revendication 4,
dans lequel ledit organe de base comprend une paroi de butée (113) située sur le côté arrière de celui-ci entre lesdites deux fentes de cordon et apte à amener en butée une extrémité dudit organe élastique à l'encontre dudit organe coulissant ; et
dans lequel ledit organe coulissant comprend une tige d'alignement (24) s'étendant à partir du bloc de base de celui-ci et couplée à un côté opposé dudit organe élastique.

6. Le bloqueur de cordons de l'une des revendications 3 à 5,
dans lequel ledit organe de base comprend deux parties dentées (112) respectivement disposées dans ledit passage sur deux côtés latéraux opposés pour venir en contact avec les organes de cordon insérés ; et
dans lequel ledit organe de blocage comprend une pluralité de saillies de venue en prise (31) espacées autour de la périphérie de celui-ci pour amener en butée les organes de cordon insérés à l'encontre desdites parties dentées dudit organe de base.

7. Le bloqueur de cordons de l'une des revendications 4 à 6,
dans lequel ledit organe de base comprend une fente de coulissement de dessus (13) située verticalement sur le côté de dessus de celui-ci ;
dans lequel ledit organe coulissant comprend un trou traversant (23) ménagé verticalement au travers dudit bloc de base ; et
dans lequel ladite au moins une tige de couplage de dessous dudit capot est insérée au travers de ladite fente de coulissement de dessus dudit organe de base et couplée au trou traversant sur ledit bloc de base dudit organe coulissant.

8. Le bloqueur de cordons de la revendication 7,
dans lequel ledit organe coulissant comprend deux gorges de rétention (231) situées sur une paroi intérieure dudit bloc de base sur deux côtés latéraux opposés par rapport au trou traversant dudit bloc de base ; et
dans lequel ladite au moins une tige de couplage de dessous dudit capot comprend deux parties en crochet (511) respectivement crochetées avec lesdites gorges de rétention dudit organe coulissant.

9. Le bloqueur de cordons de la revendication 7 ou 8,
dans lequel ledit organe élastique comprend une partie de base (41), une partie de liaison (42), une partie compressible (43) reliée entre ladite partie de base et ladite partie de liaison ;
ladite partie de liaison définissant un trou de confinement (421) correspondant à ladite fente de coulissement de dessous dudit organe de base pour le passage de la au moins une tige de couplage de dessous dudit capot.

10. Le bloqueur de cordons de la revendication 9,
dans lequel ledit organe élastique comprend en outre une pluralité d'espaces de dispositif de rétention dans ledit trou de confinement ; et
dans lequel ladite au moins une tige de couplage de dessous dudit capot comprend une gorge annulaire s'étendant autour de la périphérie de celui-ci et venant en prise avec les dispositifs de rétention dudit organe élastique.

11. Le bloqueur de cordons de l'une des revendications 9 ou 10,
dans lequel ladite partie de connexion dudit organe élastique présente une face de contact légèrement incurvée disposée sur un côté avant de celui-ci et maintenue en contact avec la périphérie dudit organe de verrouillage contre ledit bloc de butée dudit organe coulissant pour empêcher le déplacement dudit organe de verrouillage par rapport audit organe coulissant et permettre la rotation dudit organe de verrouillage dans ladite partie de palier en évidement dudit organe coulissant.

12. Le bloqueur de cordons de l'une des revendications 4 à 11,
dans lequel ledit bloc de butée dudit organe coulissant est courbé légèrement et transversalement et maintenu en contact avec la périphérie dudit organe de verrouillage.

13. Le bloqueur de cordons de l'une des revendications 1 à 12,
dans lequel ledit organe de verrouillage comprend en outre un trou traversant central (32) ; et
dans lequel ledit rail coulissant comprend une tige verticale (223) s'étendant à partir d'un côté de dessus du rail coulissant pour s'insérer dans ledit trou traversant central dudit organe de verrouillage et supporter à pivotement l'organe de verrouillage.

14. Le bloqueur de cordons de l'une des revendications 4 à 13,
dans lequel ledit capot comprend une partie de poussoir consistant en une pluralité de cônes anti-glissement (521) situés sur une paroi de dessus dudit capot.

15. Le bloqueur de cordons de la revendication 13,
dans lequel ledit organe de base comprend en outre deux trous latéraux (13) respectivement disposés sur deux côtés latéraux opposés par rapport audit passage, et dans lequel ledit organe de base permet l'insertion de deux organes de cordon au travers dudit passage et desdites fentes de cordon ;
dans lequel ledit organe coulissant comprend en outre un bloc de base, avec ledit rail coulissant s'étendant vers l'avant à partir de la partie médiane d'un côté dudit bloc de base, et dans lequel ledit organe coulissant comprend en outre deux bras latéraux (52) s'étendant vers l'avant à partir dudit bloc de base au niveau de deux côtés latéraux opposés par rapport audit rail coulissant et respectivement couplés auxdits trous latéraux dudit organe de base pour guider le mouvement vers l'avant et vers l'arrière dudit organe coulissant par rapport audit organe de base ; et
dans lequel ledit organe de blocage est mobile avec ledit organe coulissant par rapport audit organe de base entre une position de blocage pour bloquer les organes de cordon insérés contre l'organe de base et une position de déblocage pour libérer les organes de cordon insérés dudit organe de base, ledit organe de blocage comprenant en outre une pluralité de saillies de venue en prise espacées sur le pourtour de la périphérie de celui-ci.
